# EUROPÄISCHE PATENTANMELDUNG

(11) **EP 2 515 143 A1**
(43) Veröffentlichungstag der Anmeldung: **24.10.2012**
(21) Anmeldenummer: 11162838.4
(22) Anmeldetag: 18.04.2011
(51) Int. Cl.: G01S 17/02, G01S 17/93, G01N 21/53

(54) **Verfahren zur sicheren Erfassung und Positionsbestimmung von Objekten und Sicherheitsvorrichtung**

(71) Anmelder: SICK AG, 79183 Waldkirch (DE)
(72) Erfinder: Wüstefeld, Martin, 79350 Sexau (DE)
(74) Vertreter: Ludewigt, Christoph

(57) **Zusammenfassung**

Die Erfindung betrifft ein Verfahren und eine Vorrichtung zur sicheren Erfassung und Positionsbestimmung von Objekten in einem Überwachungsbereich mittels eines optoelektronischen Sensors mit den Schritten:
- Aussenden eines Sendelichtstrahls mit einem Lichtsender und
- periodisches Abtasten des Überwachungsbereichs des Sensors mit wenigstens einem Sendelichtstrahl;
- Empfangen des an Objekten im Überwachungsbereich reflektierten Sendelichtstrahls mit einem Lichtempfänger und Bereitstellen von Empfangssignalen, deren Signalhöhen den empfangenen Lichtintensitäten entsprechen,
- Ausgeben eines Sicherheitssignals, wenn ein unzulässiges Objekt im Überwachungsbereich ein Empfangssignal erzeugt, das eine Schaltbedingung erfüllt,
- Überprüfen des Empfangssignals durch Erzeugen eines Referenzsignals innerhalb des Sensors und Vergleichen mit der Schaltbedingung,
- Überwachen der Sendeleistung des Lichtsenders und Überwachen des Referenzsignals,
- Ermitteln des zeitlichen Verlaufs des an einem Objekt rückgestreuten Signals,
- Bestimmen eines Vorhandenseins von Softtargets,
- Anpassen der Schaltbedingung in Abhängigkeit des Vorhandenseins von Softtargets.

## Beschreibung

Die Erfindung betrifft ein Verfahren zur sicheren Erfassung und Positionsbestimmung von Objekten in einem Überwachungsbereich nach dem Oberbegriff von Anspruch 1 und eine Sicherheitsvorrichtung zur Durchführung des Verfahrens.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl wird über eine Lichtablenkeinheit in einen Schutzbereich gelenkt und dort von einem gegebenenfalls vorhandenen Objekt remittiert. Zumindest ein Teil des remittierten Lichts gelangt wieder zurück zu der Laserscaneinheit und wird dort von einem Empfänger detektiert. Die Lichtablenkeinheit ist in der Regel schwenkbar bzw. drehbar ausgestaltet, so dass der von dem Laser erzeugte Lichtstrahl ein durch die Schwenk- bzw. Drehbewegung erzeugtes Schutzfeld periodisch überstreicht. Wird ein vom Objekt remittiertes Lichtsignal aus dem Schutzbereich empfangen, so kann aus der Winkelstellung der Ablenkeinheit auf die Winkellage des Objektes im Schutzbereich geschlossen werden. Wird zusätzlich zum Beispiel die Laufzeit von einzelnen Laserlichtpulsen vom Aussenden bis zum Empfang einer Reflexion an dem Objekt überwacht, kann aus der Laufzeit unter Verwendung der Lichtgeschwindigkeit zusätzlich auf die Entfernung des Objektes vom Laserscanner geschlossen werden. Mit den Winkel- und Entfernungsangaben lässt sich der Ort des Objektes ermitteln und die vom Lichtstrahl überstrichene Scanebene vollständig überwachen. Befindet sich in der Scanebene ein unzulässiges Objekt, so kann von der Auswerteeinheit des Scanners ein entsprechendes Warn- oder Stoppsignal ausgegeben werden.

Derartige Systeme werden zum Beispiel an Maschinen eingesetzt, bei denen ein Gefahrenbereich überwacht werden muss, der beim Betrieb der Maschine von einer

Bedienperson nicht betreten werden darf. Wird mit Hilfe des Laserscanners die Anwesenheit eines unzulässigen Objektes - also zum Beispiel ein Bein einer Bedienperson - im Gefahrenbereich festgestellt, wird ein Nothalt der Maschine bewirkt. Derartige Scansysteme als Sicherheitssensoren müssen zuverlässig arbeiten und deshalb hohe Sicherheitsanforderungen, beispielsweise die Norm EN13849 für Maschinensicherheit und insbesondere die Gerätenorm EN61496 für berührungslos wirkende Schutzeinrichtungen (BWS), erfüllen.

Zur Erfüllung dieser Sicherheitsnormen sind eine Reihe von Maßnahmen zu treffen, wie z. B. sichere elektronische Auswertung durch redundante, diversitäre Elektronik, Funktionsüberwachung durch beispielsweise Überwachung der Verschmutzung optischer Bauteile, insbesondere einer Frontscheibe und/oder Vorsehen von einzelnen Testzielen mit definierten Reflexionsgraden, die unter den entsprechenden Scanwinkeln erkannt werden müssen.

Solche Sicherheitslaserscanner werden auch an sogenannten FTS ("fahrerlose Transportsysteme") eingesetzt, um zu verhindern, dass diese Transportsysteme mit Objekten, die ihren Fahrweg kreuzen, wie z. B. Personen, zusammenstoßen. Da die Zusammenstoßgefahr geschwindigkeitsabhängig ist, weist der Laserscanner anpassbare Schutzfelddimensionen auf, die in Abhängigkeit der Fahrzeuggeschwindigkeit umschaltbar oder in sonstiger Weise veränderbar sind.

Im Indoor Bereich, in dem keine Sichtstörungen von außen auftreten, sind die genannten Maßnahmen zur Erfüllung der Sicherheitsnormen ausreichend. Im Outdoor Bereich ist der Einsatz von Sicherheitsscannern bisher sehr problematisch. Durch Regen, Nebel, Schnee, Luftverschmutzung und dergleichen, die im Folgenden "Softtargets" genannt werden, wird die nutzbare optische Leistung in unbekanntem Maße reduziert und damit die Detektionszuverlässigkeit reduziert. Das führt zu nicht vorhersagbarem fehlerhaften Ansprechen des Scanners, beispielsweise aufgrund von an den Softtargets reflektierter Sendestrahlung, die vom Scanner als "Objekt im Schutzbereich" interpretiert wird, sobald das rückgestreute Signal oberhalb einer Bewertungsschwelle liegt. Ein weiterer Nachteil ist, dass beim Auftreten von Softtargets die Sendestrahlung gedämpft wird und damit die Sichtweite in unbekanntem Maße reduziert wird, so dass möglicherweise Objekte im Schutzbereich nicht erkannt werden.

Aus der DE 39 08 273 C1 ist ein Scanner bekannt, bei dem durch Überwachung der Positionen mehrerer abgesetzter, externer Testziele mit definierten Reflektionsgraden die Detektionsfähigkeit sichergestellt werden kann.

Nachteilig daran ist, dass die Änderung des Reflexionsgrades des externen Testzieles und damit einhergehende Änderung der Detektionsfähigkeit im Falle des Auftretens von Softtargets nicht aufgedeckt werden. Im Wesentlichen wird nur geprüft, ob in den Bereichen, in denen sich ein Absorber als Testziel befindet, kein Licht empfangen wird und in den Bereichen, in denen Reflektoren vorgesehen sind, Licht empfangen wird. Änderungen des Reflektionsgrades der Testziele und damit einhergehende Änderungen der Detektionsfähigkeit im Falle des Auftretens interner Fehler des Scanners, wie zum Beispiel Abfallen der Sendeleistung oder Anstieg der Bewertungsschaltschwellen, werden nicht aufgedeckt. Weiter nachteilig ist der notwendige Einsatz von speziell für den Scanner ausgelegte Testziele. Auch müssen sich die Testziele in einem vorgegebenen Abstand vom Scanner befinden.

Aus der EP 1 302 784 A2 ist ein Laserscanner bekannt, der als Fahrerassistenzsystem eingesetzt wird, und der anhand global oder stochastisch auftretender Reflektionen mittels Modelannahmen entscheiden kann, dass die Reflektionen von Nebel, Gischt, Regen oder Schnee stammen. Dementsprechend kann die Sichtweite des Laserscanners bestimmt werden.

Ausgehend von diesem Stand der Technik ist es Aufgabe der Erfindung, die genannten Nachteile zu vermeiden und ein verbessertes Verfahren und eine Sicherheitsvorrichtung bereitzustellen, mit der eine definierte Detektionsfähigkeit, insbesondere im Outdoor Einsatz, erhalten werden kann.

Diese Aufgabe wird durch ein Verfahren mit den Merkmalen des Anspruchs 1 und eine Sicherheitsvorrichtung mit den Merkmalen des Anspruchs 3 gelöst.

Der besondere Vorteil des erfindungsgemäßen Verfahrens besteht in einer definierten Detektionsfähigkeit des Scanners auch bei Vorliegen von Softtargets, wie sie im Outdoor Bereich auftreten. Außerdem kann damit eine definierte Verfügbarkeit angegeben werden. Verfügbarkeit bedeutet hier die Fähigkeit, den Betrieb auch beim Auftreten von Störungen aufrecht zu erhalten.

Vorteilhaftwerweise wird die Dichte der Softtargets ermittelt.

In Weiterbildung der Erfindung wird aus der Dichte eine resultierende Signaldämpfung berechnet und damit die resultierende Reichweite des Sensors berechnet, um ein Referenzobjekt mit definiertem Reflektionsgrad, vorzugsweise 2 %, erkennen zu können.

Mit bekannter Signaldämpfung und damit bekannter Reichweite des Sensors kann die maximal zulässige Geschwindigkeit eines fahrerlosen Transportsystems berechnet und die Geschwindigkeit entsprechend angepasst werden.

Vorteilhafterweise wird die Geschwindigkeit so angepasst, dass ein Transportsystem zum Halt gekommen ist, bevor es zu einer Kollision mit einem Objekt im Überwachungsbereich kommen kann.

Die Erfindung wird nachstehend unter Bezugnahme auf die beigefügte Zeichnung anhand von Ausführungsbeispielen erläutert. Die Figuren der Zeichnung zeigen in:
- Fig. 1: eine schematische Darstellung einer Sicherheitsvorrichtung gemäß der Erfindung;
- Fig. 2: ein Ablaufdiagramm des erfindungsgemäßen Verfahrens.

Die im Folgenden beschriebene Sicherheitsvorrichtung umfasst einen Laserscanner und dient zum Beispiel zur Überwachung auf unbefugten Zugriff eines Überwachungsbereichs. Zum Beispiel kann der Gefahrenbereich eines Krans, einer Holzbearbeitungsmaschine oder dergleichen überwacht werden, in den während des Betriebes keine Bedienperson eindringen darf. Oder es kann der Bereich vor einem autonom fahrenden Fahrzeug überwacht werden und dergleichen mehr. Befindet sich ein unzulässiges Objekt, zum Beispiel das Bein einer Bedienperson, in dem Überwachungsbereich, so wird dies von dem beschriebenen Scanner detektiert und ein Sicherheitssignal, das ein Warn- oder ein Abschaltsignal sein kann, ausgegeben und die Gefahr bringende Bewegung gestoppt oder zumindest abgebremst.

Der Begriff des "unzulässigen Objektes" wird im vorliegenden Text für unzulässige bzw. störende Objekte im Schutzfeld verwendet. Insbesondere können damit zum Beispiel auch gefährdete Körperteile von Bedienpersonen gemeint sein.

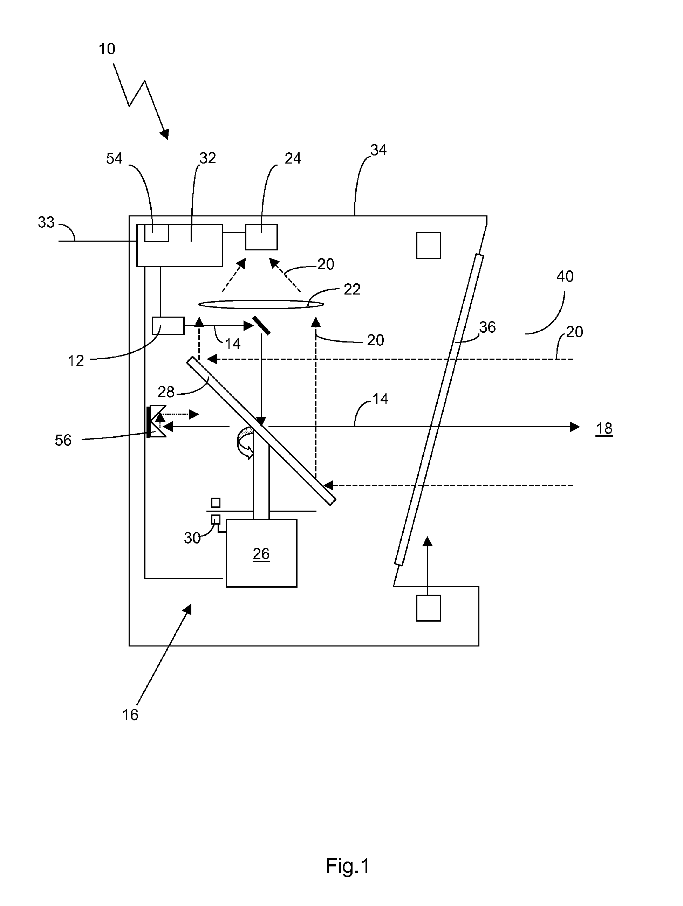

Fig. 1 zeigt schematisch den Aufbau einer Ausführungsform eines Sicherheits-Laserscanners 10 einer erfindungsgemäßen Sicherheitsvorrichtung. Ein von einem Laser 12 erzeugter Lichtstrahl 14, der aus einzelnen Lichtimpulsen besteht, wird über eine Lichtablenkeinheit 16 in einen Überwachungsbereich 18 gelenkt und dort von einem gegebenenfalls vorhandenen Objekt remittiert. Der Sichtbereich umfasst den gesamten Öffnungswinkel des Scanners 10. Remittiertes Licht 20 gelangt wieder zurück zum Laserscanner 10 und wird dort über die Ablenkeinheit 16 und mittels einer Empfangsoptik 22 von einem Empfänger 24 detektiert. Die Lichtablenkeinheit 16 ist in der Regel drehbar ausgestaltet, wobei ein Motor 26 einen Drehspiegel 28 kontinuierlich rotiert. Die jeweilige Winkelstellung des Drehspiegels 28 wird über einen Encoder 30 erfasst. Der von dem Laser 12 erzeugte Lichtstrahl 14 überstreicht somit den durch die Rotationsbewegung erzeugten Sichtbereich. Wird ein vom Empfänger 24 empfangenes reflektiertes Lichtsignal 20 aus dem Überwachungsbereich 18 empfangen, so kann aus der Winkelstellung der Ablenkeinheit 30 auf die Winkellage des Objektes im Überwachungsbereich 18 geschlossen werden. Zusätzlich wird die Laufzeit der einzelnen Laserlichtpulse des Sendelichts 14 vom Aussenden bis zum Empfang einer Reflexion an dem Objekt überwacht und aus der Lichtlaufzeit unter Verwendung der Lichtgeschwindigkeit auf die Entfernung des Objektes vom Laserscanner 10 geschlossen. Diese Auswertung erfolgt in einer Auswerteeinheit 32, die dafür mit dem Laser 12, dem Empfänger 24, dem Motor 26 und Encoder 30 verbunden ist. Mit den Winkel- und Entfernungsangaben lässt sich der Ort des Objektes ermitteln und auf diese Weise zum Beispiel zweidimensionale Überwachungsbereiche vollständig überwachen. Der Überwachungsbereich 18 ist in seinen Abmessungen durch entsprechende Parameter definiert, die in der Auswerteeinheit 32 in einem Speicher 54 abgelegt sind. Befindet sich im Überwachungsbereich 18 ein unzulässiges Objekt, so kann von der Auswerteeinheit 32 ein entsprechendes Objektfeststellungssignal an einem Ausgang des Laserscanners 10 über eine Leitung 33 ausgegeben werden und somit letztendlich ein Sicherheitssignal ausgegeben werden, um zum Beispiel einen Stopp einer Gefahr bringenden Maschine herbeizuführen.

Andere Ausführungsformen eines solchen Scanners sind vorstellbar, beispielsweise Scanner, die nicht auf Basis der Lichtlaufzeit von einzelnen Laserpulsen die Entfernung bestimmen, sondern über Triangulation oder über einen Vergleich der Phase von amplitudenmoduliertem Sendelicht mit der Phase des reflektierten Lichts.

Alle genannten Funktionskomponenten sind in einem Gehäuse 34 angeordnet, das frontseitig, also im Bereich des Lichtaus- und Lichteintritts, eine Frontscheibe 36 aufweist. Die Frontscheibe 36 ist zur Vermeidung von direkten Reflexionen in den Empfänger schräg gestellt, so dass der Winkel zwischen Lichtstrahl 14 und Frontscheibe 36 ungleich 90° beträgt.

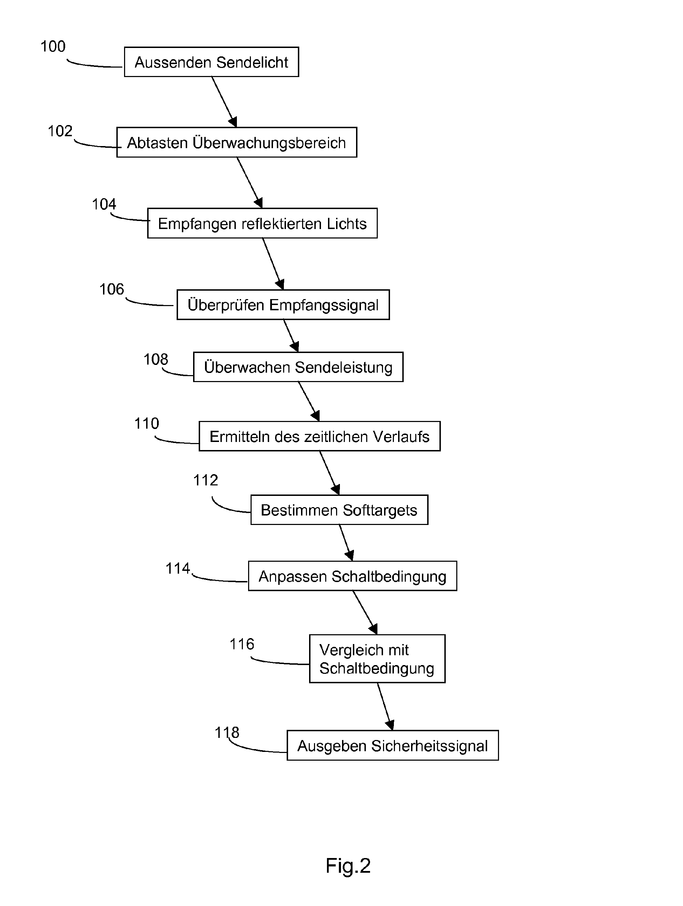

Das erfindungsgemäße Verfahren läuft wie anhand der Fig. 2 schematisch erläutert, wie folgt ab:
In einem Schritt 100 wird ein Sendelichtstrahl mit dem Lichtsender 12 ausgesendet. Mittels des Ablenkspiegels 28 wird im Schritt 102 der Sendelichtstrahl 14 durch den Überwachungsbereich 18 periodisch geführt, so dass der Überwachungsbereich 18 abgetastet wird. Befinden sich Objekte im Überwachungsbereich 18 des Scanners 10, wird der Sendelichtstrahl 14 an diesen Objekten reflektiert und das reflektierte Licht von dem Lichtempfänger 24 empfangen (Schritt 104). Lichtempfänger 24 wandelt das empfangene Licht in elektrische Empfangssignale, deren Signalhöhen den empfangenen Lichtintensitäten entsprechen. Befindet sich ein unzulässiges Objekt im Überwachungsbereich 18, so wird von der Auswerteeinheit 32 ein Sicherheitssignal, beispielsweise ein Warn- oder Abschaltsignal, auf der Leitung 33 ausgegeben.

Pro Umdrehung des Ablenkspiegels 28 überstreicht das Sendelicht ein Testziel 56 im Inneren des Laserscanners 10, so dass in einem Schritt 106 das Empfangssignal und gleichzeitig auch die Sendeleistung (Schritt 108) überwacht werden können. Das Empfangssignal wird dabei mit der aktuellen Schaltbedingung verglichen.

In einem nächsten Schritt 110 wird der zeitliche Verlauf des an einem Objekt rückgestreuten Empfangssignals ermittelt und daraus in der Auswerteeinheit 32 in einem Schritt 112 bestimmt, ob Softtargets vorhanden sind.

In Abhängigkeit vom Vorhandensein von Softtargets wird in einem Schritt 114 die Schaltbedingung angepasst, so dass z. B. bei Nebel die maximale Entfernung bis zu der der Laserscanner noch auf dem gewünschten Sicherheitsniveau arbeiten kann, entsprechend reduziert ist. Somit arbeitet die erfindungsgemäße Sicherheitsvorrichtung 10 immer mit den richtigen Sicherheitsanforderungen und es ist eine definierte Detektionsfähigkeit gegeben.

Dabei erfolgt im Schritt 116 ein Vergleich des Empfangssignals mit der Schaltbedingung, so dass im Schritt 118 schließlich ein Sicherheitssignal ausgegeben wird, wenn ein unzulässiges Objekt im Überwachungsbereich bei den Sichtverhältnissen detektiert wurde.

Dadurch dass die Schaltbedingung den Sichtverhältnissen angepasst wird, hat die erfindungsgemäße Sicherheitsvorrichtung eine genau definierte Detektionsfähigkeit, auch wenn Softtargets, wie Nebel, Regen, Schnee oder sonstige Luftverschmutzung vorliegen.

## Patentansprüche

1. Verfahren zur sicheren Erfassung und Positionsbestimmung von Objekten in einem Überwachungsbereich mittels eines optoelektronischen Sensors mit den Schritten:
- Aussenden eines Sendelichtstrahls mit einem Lichtsender und
- periodisches Abtasten des Überwachungsbereichs des Sensors mit wenigstens einem Sendelichtstrahl;
- Empfangen des an Objekten im Überwachungsbereich reflektierten Sendelichtstrahls mit einem Lichtempfänger und Bereitstellen von Empfangssignalen, deren Signalhöhen den empfangenen Lichtintensitäten entsprechen,
- Ausgeben eines Sicherheitssignals, wenn ein unzulässiges Objekt im Überwachungsbereich ein Empfangssignal erzeugt, das eine Schaltbedingung erfüllt,
- Überprüfen des Empfangssignals durch Erzeugen eines Referenzsignals innerhalb des Sensors und Vergleichen mit der Schaltbedingung,
- Überwachen der Sendeleistung des Lichtsenders und Überwachen des Referenzsignals,
- Ermitteln des zeitlichen Verlaufs des an einem Objekt rückgestreuten Signals,
- Bestimmen eines Vorhandenseins von Softtargets,
- Anpassen der Schaltbedingung in Abhängigkeit des Vorhandenseins von Softtargets.

2. Verfahren nach einem der vorhergehenden Ansprüche, wobei die Dichte der Softtargets ermittelt wird.

3. Verfahren nach Anspruch 2, wobei aus der Dichte eine resultierende Signaldämpfung berechnet wird und damit die resultierende Reichweite des Sensors berechnet wird, ein Referenzobjekt mit definiertem Reflektionsgrad zu erkennen.

4. Verfahren nach Anspruch 3, wobei der Reflektionsgrad ungefähr 2 % beträgt.

5. Verfahren nach Anspruch 3 oder 4, wobei aus der resultierenden Reichweite die maximal zulässige Geschwindigkeit eines fahrerlosen Transportsystems berechnet wird und die Geschwindigkeit entsprechend angepasst wird.

6. Verfahren nach Anspruch 5, wobei die Geschwindigkeit so angepasst wird, dass ein Transportsystem zum Halt gekommen ist, bevor es zu einer Kollision mit einem Objekt im Überwachungsbereich kommen kann.

7. Sicherheitsvorrichtung für ein Verfahren nach einem der vorhergehenden Ansprüche mit einem optoelektronischen Sensor, mit einem Lichtsender zum Aussenden eines Sendelichtstrahls, mit einer Ablenkeinheit zum periodischen Abtasten eines Überwachungsbereichs mit dem Sendelichtstrahl, einem Lichtempfänger zum Empfangen des an Objekten im Sichtbereich reflektierten Sendelichtstrahls und zum Bereitstellen von Empfangssignalen, deren Signalhöhen den empfangenen Lichtintensitäten entsprechen, einer Auswerteeinheit
- zum Verarbeiten der Empfangssignale und Ausgeben eines Sicherheitssignals, wenn ein unzulässiges Objekt im Überwachungsbereich ein Empfangssignal erzeugt, das eine Schaltbedingung erfüllt,
- zum Überprüfen des Empfangssignals durch Erzeugen eines Referenzsignals innerhalb des Sensors und Vergleichen mit der Schaltbedingung,
- zum Überwachen der Sendeleistung des Lichtsenders und Überwachen des Referenzsignals,
- zum Ermitteln des zeitlichen Verlaufs des an einem Objekt rückgestreuten Signals,
- zum Bestimmen eines Vorhandenseins von Softtargets,
- zum Anpassen der Schaltbedingung in Abhängigkeit des Vorhandenseins von Softtargets.

8. Sicherheitsvorrichtung nach Anspruch 7, **dadurch gekennzeichnet, dass** der Sensor als Laserscanner ausgebildet ist.

9. Sicherheitsvorrichtung nach Anspruch 8, **dadurch gekennzeichnet, dass** der Sensor als Entfernungskamera ausgebildet ist.
